# FASCICULE DE BREVET EUROPEEN

(11) **EP 2 193 708 B1**
(45) Date de publication et mention de la délivrance du brevet: **31.08.2011**
(21) Numéro de dépôt: 09176654.3
(22) Date de dépôt: 20.11.2009
(51) Int. Cl.: A01G 9/02

(54) **Casier pour paroi végétalisée**
Kasten für Begrünungswand
Container for vegetated wall

(30) Priorité: 08.12.2008 FR 0806863
(43) Date de publication de la demande: 09.06.2010
(73) Titulaire: Acaulia, 76540 Thiergeville (FR)
(72) Inventeur: Le Grand, François, 76540 Thiergeville (FR)
(74) Mandataire: Guérin, Jean-Philippe

(56) Documents cités:
- EP-A1- 1 803 697
- FR-A1- 2 851 419
- FR-A1- 2 872 381

## Description

L'invention concerne la culture de plantes, et en particulier la formation de parois végétalisées.

Les parois végétalisées comprennent une structure supportant un substrat tel que de la terre végétale dans lequel une pluralité de plantes poussent. Les plantes adoptent sensiblement la forme de la structure pour former une paroi de verdure. Ces parois de verdure permettent notamment de masquer des murs ou de former une séparation dans des bâtiments.

Le document FR 2 872 381 décrit une structure pour mur végétalisé. Cette structure est constituée de casiers de formes prismatiques, les casiers adjacents étant assemblés entre eux. Par leur assemblage, les casiers forment une structure auto porteuse. Chaque casier présente un châssis formé de barres. Des fils métalliques formant un grillage sont tendus entre les barres du châssis. Les casiers présentent des faces grillagées et sont remplis d'un substrat de plantation. La face avant d'un casier est amovible afin de permettre l'insertion du substrat de plantation ou le montage d'un réseau de distribution d'eau. Les plantes poussent alors à travers le maillage de cette face avant.

Une telle structure présente cependant des inconvénients. D'une part, les casiers occupent un volume conséquent durant leur stockage ou durant leur transport. D'autre part, la tenue mécanique de la structure implique que tous les casiers soient de dimensions identiques et soient constitués de métal. Ainsi, les casiers présentent seulement des dimensions standards et les casiers s'avèrent relativement lourds à transporter. De plus, une intervention sur un casier peut nécessiter une opération allant au-delà de la simple ouverture de la face avant : dès lors, du fait de l'aspect autoporteur de la structure, il est nécessaire de démonter un ensemble de casiers pour pouvoir manipuler correctement le casier souhaité. Cette opération peut s'avérer particulièrement fastidieuse en présence de canaux d'irrigation et de plantes ayant déjà poussé.

L'invention vise à résoudre un ou plusieurs de ces inconvénients. L'invention porte ainsi sur un casier pour paroi de végétalisation, comprenant :
- une paroi de fond ;
- des parois avant et arrière se solidarisant de façon amovible à la paroi de fond pour définir entre elles un espace destiné à recevoir un substrat de plantation, la paroi avant présente des ouvertures pour permettre le passage de pousses de plantes, les parois avant et arrière présentant chacune au moins une ligne de fragilité selon laquelle elle peut être rompue, la ligne de fragilité de la paroi avant étant sensiblement au niveau de la ligne de fragilité de la paroi arrière.

Selon une variante, la ligne de fragilité de la paroi avant passe par au moins une des ouvertures.

Selon encore une variante, les parois avant et arrière se solidarisent à la paroi de fond par des liaisons coulissantes de type tenon/mortaise.

Selon une autre variante, la paroi de fond présente une ligne de fragilité, et les parois avant et arrière présentent chacune au moins une ligne de fragilité s'étendant parallèlement à la paroi de fond, et une ligne de fragilité s'étendant perpendiculairement à la paroi de fond et disposée au niveau de la ligne de fragilité de la paroi de fond

Selon encore une autre variante, les parois avant et arrière présentent chacune au moins deux alésages en vis-à-vis disposés sous la ligne de fragilité parallèle à la paroi de fond.

Selon une variante, le casier comprend en outre deux parois latérales se solidarisant aux paroi avant et arrière de façon amovible, chaque paroi latérale présentant une ligne de fragilité sensiblement au niveau de la ligne de fragilité de la paroi avant.

Selon encore une variante, la paroi de fonds présente des encoches et les parois latérales présentent chacune un ergot se logeant dans une encoche de la paroi de fond lorsque ces parois latérales sont solidarisées aux parois avant et arrière.

Selon une autre variante, lesdites parois sont formées en matière synthétique.

Selon encore une autre variante, une ligne de fragilité est formée par un amincissement suivant cette ligne de la section d'une paroi.

Selon une variante, une rainure ménagée sur une face d'une desdites parois forme une ligne de fragilité.

D'autres caractéristiques et avantages de l'invention ressortiront clairement de la description qui en est faite ci-après, à titre indicatif et nullement limitatif, en référence aux dessins annexés, dans lesquels :
- la figure 1 est une vue en perspective d'une structure porteuse ;
- la figure 2 est une vue en perspective d'un mode de réalisation d'un casier selon l'invention ;
- les figures 3 et 4 sont respectivement des vues de dessus et de côté d'une paroi de fond du casier de la figure 2 ;
- les figures 5 à 7 sont respectivement des vues de face, de côté et de dessus d'une face avant du casier ;
- les figures 8 et 9 sont respectivement des vues de côté et de dessus d'une paroi latérale du casier ;
- les figures 10 et 11 sont respectivement de vue en perspective et de côté d'un premier exemple de support de fixation du casier ;
- la figure 12 est une vue de côté d'un deuxième exemple de support de fixation du casier ;
- la figure 13 est une vue de côté d'un troisième exemple de support de fixation du casier ;
- la figure 14 est une vue en coupe d'une paroi latérale munie d'une variante de ligne de fragilité.

L'invention propose un casier destiné à recevoir un substrat de plantation. Ce casier comprend des parois de fonds, avant et arrière. Les parois avant et arrière se solidarisent de façon amovible à la paroi de fond. La paroi avant présente des ouvertures permettant le passage de pousses de plantes. Les parois avant et arrière présentent chacune au moins une ligne de fragilité selon laquelle elles peuvent être rompues. Les lignes de fragilité des parois avant et arrière sont sensiblement au même niveau.

Du fait de la solidarisation amovible entre les parois, le casier peut être transporté dans une configuration compacte, où les parois sont disposées à plat. Les casiers peuvent être transportés dans un volume réduit, ce qui s'avère particulièrement avantageux lorsque le montage du casier et son remplissage en substrat de plantation ont lieu à distance du lieu de fabrication des parois du casier. De plus, en rompant des parois selon leurs lignes de fragilité, l'utilisateur peut dimensionner de façon adéquate le casier selon ses besoins. Le cas échéant, l'utilisateur pourra par exemple fixer la hauteur ou la longueur du casier. Les parois étant démontables, la rupture selon une ligne de fragilité peut être effectuée paroi par paroi.

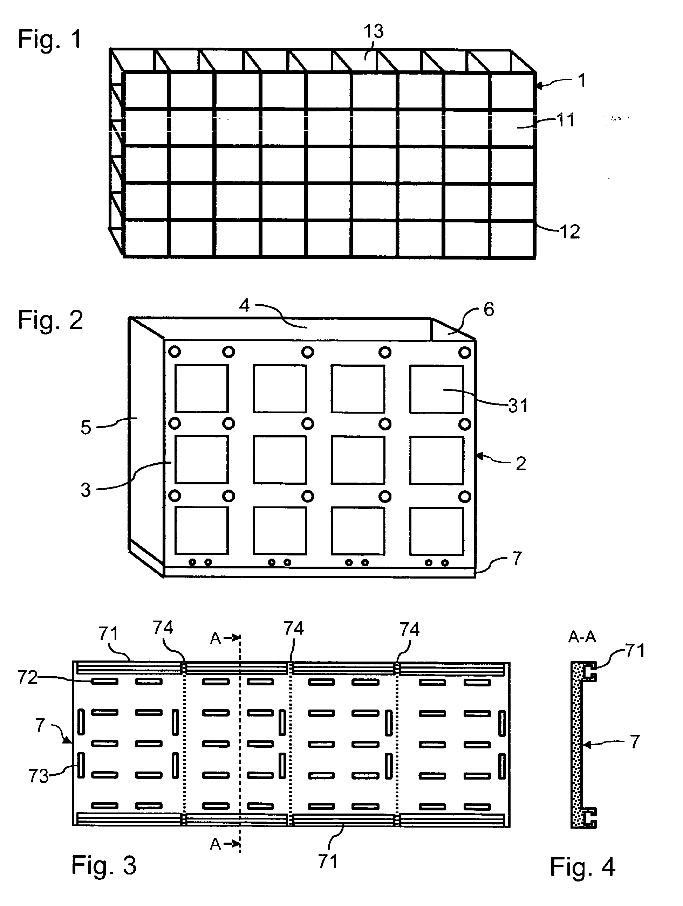

La figure 1 représente une structure porteuse 1 destinée à recevoir des casiers. La structure porteuse 1 est formée d'un treillis de barres métalliques 12, ménageant entre elles des ouvertures 11. Un volume 13 est ménagé dans la structure 1, dans lequel des casiers de plantation peuvent être placés à travers les ouvertures 11. Les casiers de plantation peuvent être fixés par tout moyen approprié à la structure porteuse 1. Une fois les casiers fixés dans le volume 13 et plantés de différentes plantes, les plantes vont pousser et traverser les ouvertures 11 pour masquer les barres métalliques et les casiers. Un mur végétalisé est ainsi formé.

Les casiers de plantation ne sont donc pas autoporteurs, ce qui permet d'intervenir sur chaque casier indépendamment en le retirant par une ouverture 11, même après plantation. Le substrat de plantation ou les semences pourront ainsi être renouvelés aisément. Par ailleurs, la structure porteuse 1 peut comporter un réseau de canalisations arrosant les casiers se trouvant en dessous en eau et en matières nutritives. Les casiers peuvent ainsi être retirés de la structure 1 sans avoir à intervenir sur les canalisations, contrairement au cas d'une structure autoporteuse de casiers.

La figure 2 est une vue en perspective d'un exemple de casier de plantation 2. Le casier 2 comprend une paroi de fond 7, des parois avant 3 et arrière 4, ainsi que des parois latérales 5 et 6. Les orientations (haut, bas, avant, arrière, latéral) des différentes parois correspondront aux orientations du casier 2. Les parois 3 à 7 délimitent entre elles un volume dans lequel le substrat de plantation peut être disposé. Les parois 3 à 6 ménagent une ouverture supérieure par laquelle le substrat de plantation peut être chargé et par laquelle de l'eau et des éléments nutritifs peuvent être déversés.

Dans l'exemple illustré, le casier 2 a une forme de parallélépipède rectangle. Les parois 3 à 6 sont perpendiculaires à la paroi de fond 7. Les parois 3 et 4 sont perpendiculaires aux parois 5 et 6.

Les figures 3 et 4 représentent la paroi de fond 7 du casier 2. La paroi de fond 7 présente sur ses bords avant et arrière des glissières 71. La paroi 7 présente des lignes de fragilité 74 la traversant dans le sens de la profondeur. Les lignes de fragilité 74 sont réparties longitudinalement sur la paroi 7 afin de permettre de délimiter la longueur de celle-ci par rupture selon une ligne de fragilité 74 appropriée. Les glissières 71 sont avantageusement interrompues au niveau des lignes de fragilité 74, afin de faciliter la rupture au niveau de ces lignes. La paroi 7 présente des orifices traversants 72 permettant à de l'eau de ruisseler vers d'autres casiers 2 disposés en dessous. Des canalisations disposées dans la partie supérieure de la structure 1 permettent ainsi d'alimenter l'ensemble des casiers 2 disposés en dessous. La paroi 7 présente également des encoches 73 réparties longitudinalement. Des encoches 73 sont disposées aux extrémités longitudinales de la paroi 7. Des encoches 73 sont également disposées en retrait par rapport à chacune des lignes de fragilité 74.

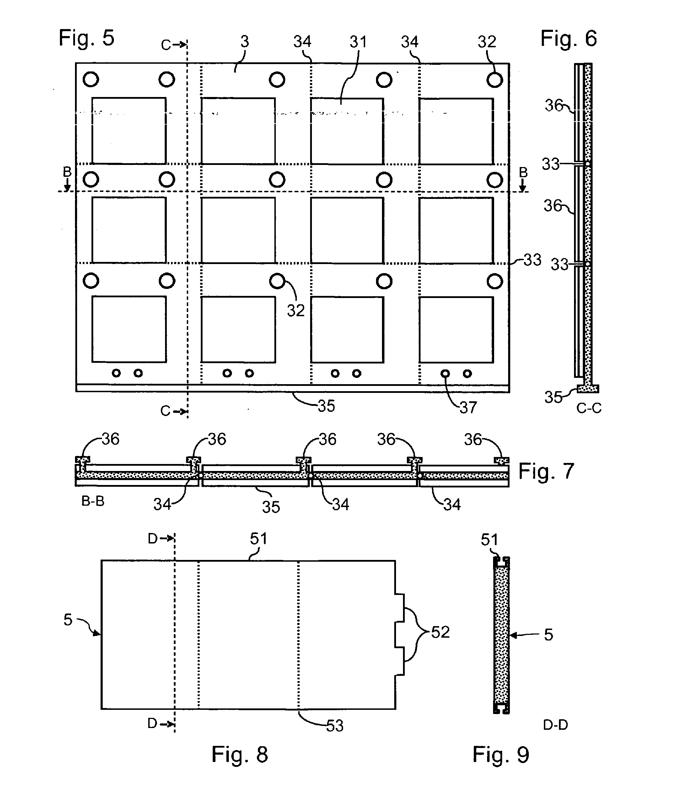

Les figures 5 à 7 représentent la paroi avant 3 du casier 2. La paroi avant 3 présente une pluralité d'ouvertures 31 destinées à former un passage pour les pousses de plantes. La paroi 3 présente des lignes de fragilité 34, sensiblement perpendiculaires à la paroi 7 du casier 2. Les lignes de fragilité 34 sont réparties longitudinalement sur la paroi 3. Ces lignes de fragilité 34 sont sensiblement au niveau des lignes de fragilité 74 de la paroi 7. Une rupture selon une ligne de fragilité 34 permet de réduire la longueur de la paroi 3. La paroi 3 présente des lignes de fragilité 33, sensiblement parallèles à la paroi 7 du casier 2. Ces lignes de fragilité 33 sont réparties verticalement sur la paroi 3. Une rupture selon une ligne de fragilité 33 permet de réduire la hauteur de la paroi 3. La paroi 3 présente de plus des tenons 36 s'étendant verticalement entre les bords haut et bas de la paroi 3. Les tenons 36 sont en saillie depuis la face intérieure de la paroi 3. Afin de faciliter une rupture selon une ligne de fragilité 33 ou 34, les lignes 33 et 34 traversent des ouvertures 31. Ainsi, la quantité de matière à briser le long d'une ligne de fragilité est réduite.

Des tenons 36 sont disposés aux extrémités latérales de la paroi 3. D'autres tenons 36 sont répartis longitudinalement dans la partie médiane de la paroi 3. Ces tenons 36 sont disposés en retrait par rapport à chacune des lignes de fragilité 34. Ainsi, après rupture selon une ligne de fragilité 34, la paroi 3 dispose encore de tenons 36 pour la fixation des parois 5. Les tenons 36 sont avantageusement interrompus au niveau des lignes de fragilité 33, afin de faciliter la rupture au niveau de ces lignes.

Des alésages, traversants. 32, sont ménagés dans la paroi 3 et sont répartis en hauteur et en longueur. Ces alésages 32 sont destinés à permettre la fixation du casier 2 comme cela sera détaillé ultérieurement. Des alésages 32 sont ménagés en retrait par rapport à chacune des lignes de fragilité 33. Ainsi, après rupture selon une ligne de fragilité 33, la paroi dispose encore d'alésages 32 permettant sa fixation. Des alésages traversants 37 sont également ménagés dans la partie inférieure de la paroi 3. Ces alésages 37 permettent de fixer le casier 2 à la structure 1 par des colliers, permettant d'assurer une protection contre le vol des casiers 2.

La paroi 3 présente un tenon 35 au niveau de son extrémité inférieure. La section du tenon 35 est complémentaire de la section des glissières 71, de sorte que le tenon 35 et les glissières 71 forment une liaison de type tenon/mortaise. La paroi 3 peut ainsi être assemblée à la paroi 7 par coulissement. Le tenon 35 est avantageusement interrompu au niveau des lignes de fragilité 34 afin de faciliter la rupture au niveau de ces lignes.

La paroi arrière 4 peut présenter une structure identique à celle de la paroi avant 3, afin de permettre la pousse de plantes sur les deux faces de la paroi végétalisée, ainsi qu'une plantation plus aisée sur les faces avant et arrière. Une paroi 4 identique à la paroi 3 permet également de réaliser une circulation d'air bénéfique à la pousse de plantes, ainsi que d'utiliser un même moule pour fabriquer les parois 3 et 4. La paroi arrière 4 pourra également être conçue pour empêcher la pousse de plantes pour un mur végétalisé sur une seule face. Pour cela, la paroi arrière 4 pourra présenter sensiblement la même structure que la paroi avant 3 en ne disposant par contre pas des ouvertures 31.

Les figures 8 et 9 représentent la structure de la paroi latérale 5 (identique à la structure de la paroi latérale 6). Des glissières 51 sont ménagées dans les bords avant et arrière de la paroi 5. La section de ces glissières 51 est complémentaire de la section des tenons 36. Les tenons 36 et les glissières 51 forment une liaison de type tenon/mortaise. La paroi 5 pourra ainsi être assemblée par coulissement par rapport aux parois 3 et 4. La paroi 5 présente en outre des lignes de fragilité 53. Ces lignes de fragilité 53 sont réparties selon la hauteur de la paroi 5. Les lignes de fragilité 53 sont sensiblement au même niveau que les lignes de fragilité 33. La paroi 5 présente de plus deux ergots 52 au niveau de son extrémité basse. Ces ergots 52 sont conformés pour se loger dans les encoches 73, afin de maintenir la paroi 5 fixée à la paroi 7. La paroi 5 peut présenter des ouvertures destinées à laisser passer les pousses des plantes.

Lors du montage du casier 2, le tenon 35 est inséré dans une glissière 71, puis la paroi 3 est coulissée par rapport à la paroi 7, jusqu'à ce que celles-ci soient au même niveau. Par une manipulation similaire, la paroi 4 est assemblée à la paroi 7. Un tenon 36 de la paroi 3 est inséré dans la glissière 51, puis la paroi 5 est coulissée par rapport à la paroi 3. Un tenon de la paroi 4 s'insère également dans une glissière 51 opposée de la paroi 5. En fin de course, les ergots 52 s'insèrent dans des encoches 73 de la paroi 7. Par une manipulation similaire, la paroi 6 est assemblée aux parois 3 et 4.

Plusieurs parois 5 peuvent être insérées et solidarisées à des tenons 36 à des niveaux intermédiaires pour renforcer le casier 2 dans sa longueur.

Pour réduire la hauteur du casier 2, les parois 3 et 4 sont rompues selon une ligne de fragilité 33 à une même hauteur. Les parois 5 et 6 sont rompues selon une ligne de fragilité 53 à la même hauteur que les parois 3 et 4. Pour réduire la longueur du casier 2, les parois 3 et 4 sont rompues selon une ligne de fragilité 34 à un même niveau. La paroi 7 est rompue selon une ligne de fragilité 74 au même niveau que les parois 3 et 4. Plus on souhaitera disposer de choix de dimensions du casier 2, plus les parois présenteront de lignes de fragilité réparties.

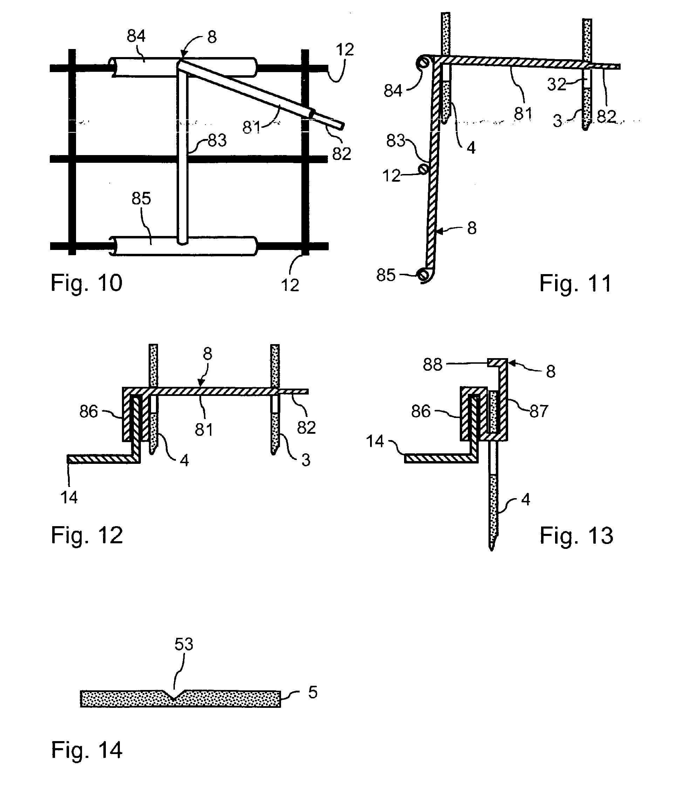

La rupture pourra être réalisée en fléchissant la paroi au niveau d'une ligne de fragilité. Les lignes de fragilité des différentes parois pourront être formées par un amincissement de la section de la paroi selon la ligne de rupture. L'amincissement de la section peut être obtenu par une alternance de matière et d'évidements. On peut également envisager qu'une ligne de fragilité soit formée par une rainure ménagée sur au moins une face d'une paroi. Une telle rainure facilitera la rupture, sans pour autant nuire excessivement à la tenue mécanique du casier 2. Une rainure permet de guider une lame de scie, si on ne souhaite pas réaliser la rupture à la main. La figure 14 représente une paroi 5 dans l'épaisseur de laquelle une rainure 53 est réalisée. On peut également envisager qu'une ligne de fragilité soit formée par l'insertion d'impuretés.

Les parois 3 à 7 seront avantageusement réalisées en matériau synthétique. Ce matériau pourra être du PVC, du PEHD ou tout matériau plastique approprié. Le matériau sera avantageusement choisi pour résister à une immersion permanente et une exposition permanente à l'ensoleillement. Les parois 3 à 7 pourront être réalisées par moulage.

La taille maximale du casier 2 avant rupture est avantageusement de 500 mm de longueur par 150 mm de profondeur et 250 mm de hauteur. Cette dimension correspond aux formats des chariots usuellement utilisés par les pépiniéristes. Le casier 2 peut également présenter un couvercle.

Le substrat de plantation disposé à l'intérieur du casier 2 pourra être de tout type adapté pour permettre l'implantation et la pousse des racines. Le substrat pourra par exemple inclure de la sphaigne, présentant un fort pouvoir de rétention d'eau.

Bien qu'on ait décrit jusque là un casier 2 de forme parallélépipédique, d'autres formes peuvent également être envisagées, par exemple une forme cylindrique.

Les figures 10 et 11 représentent un crochet de fixation 8 du casier 2 à la structure 1. Le crochet 8 présente une barre 81 destinée à traverser les alésages 32. Une extrémité de la barre 81 présente une partie filetée 82. Le crochet 8 présente une barre 83 sensiblement perpendiculaire à la barre 81. Le casier 2 peut ainsi être maintenu bloqué entre la barre 83 et un écrou vissé sur la partie filetée 82. Le crochet 8 présente une partie tubulaire 84 au niveau de la jonction entre les barres 81 et 83. La partie tubulaire 84 s'étend sensiblement perpendiculairement aux barres 81 et 83. La partie tubulaire 84 est fendue pour permettre l'insertion d'une barre métallique 12 de la structure 1. La partie tubulaire 84 permet donc de fixer le crochet 8 sur la structure 1. Une partie tubulaire 85 est fixée au niveau de l'autre extrémité de la barre 83. La partie tubulaire 85 s'étend sensiblement perpendiculairement aux barres 81 et 83. La partie tubulaire 85 est également fendue pour permettre l'insertion d'une barre métallique 12, de sorte que le casier 2 est maintenu de façon stable sur la structure 1. Le crochet 8 peut également se fixer sur une clôture.

Bien que l'on ait décrit des parties tubulaires 84 et 85, celle-ci pourront être remplacées par une pluralité d'anneaux fendus séparés par des espaces et répartis perpendiculairement aux barres 81 et 83. De tels anneaux faciliteraient la fixation sur un grillage présentant un maillage serré en laissant passer ce grillage dans les espaces intermédiaires entre les anneaux.

Bien qu'on ait décrit jusque là une fixation des casiers 2 sur une structure porteuse filaire, les casiers peuvent également être fixés à même un mur, ou sur une cornière solidaire d'un mur, sur un fer plat ou sur un profilé en T.

La figure 12 représente un crochet 8 permettant la fixation du casier 2 sur une cornière 13. Le crochet 8 présente une section 86 en forme de U dans laquelle s'insère une paroi de la cornière 13. Le crochet 8 présente également une barre 81 fixée à la section 86. Une extrémité de la barre 81 présente une partie filetée 82, permettant le vissage d'un écrou non représenté.

La figure 13 représente une variante de crochet 8 également destinée à se fixer sur une cornière 13. Selon cette variante, le crochet 8 présente deux sections en U 86 et 87 disposées tête-bêche. La section 86 est destinée à recevoir une paroi de la cornière 13. La section 87 est destinée à recevoir une partie de la paroi 4. Le bord supérieur de l'alésage 32 repose contre le fond de la section 87. La partie supérieure du crochet 8 forme un repli, facilitant le maintien de la paroi 4 dans la section 87.

Bien que l'on ait décrit des tenons en forme de T, toute autre forme appropriée peut être envisagée, par exemple un tenon de section circulaire. Bien que l'on ait décrit un assemblage des parois avant et arrière par coulissement selon une liaison tenon/mortaise, on peut également envisager une liaison par clipsage entre les parois.

## Revendications

1. Casier (2) pour paroi de végétalisation, **caractérisé en ce qu'**il comprend :
- une paroi de fond (7) ;
- des parois avant (3) et arrière (4) se solidarisant de façon amovible à la paroi de fond (7) pour définir entre elles un espace destiné à recevoir un substrat de plantation, la paroi avant (3) présente des ouvertures (31) pour permettre le passage de pousses de plantes, les parois avant et arrière présentant chacune au moins une ligne de fragilité (33,34) selon laquelle elle peut être rompue, la ligne de fragilité de la paroi avant étant sensiblement au niveau de la ligne de fragilité de la paroi arrière.

2. Casier selon la revendication 1, dans lequel la ligne de fragilité de la paroi avant (33,34) passe par au moins une des ouvertures (31).

3. Casier selon la revendication 1 ou 2, dans lequel les parois avant et arrière (3, 4) se solidarisent à la paroi de fond (7) par des liaisons coulissantes de type tenon/mortaise (71,35).

4. Casier selon l'une quelconque des revendications précédentes, dans lequel la paroi de fond (7) présente une ligne de fragilité (74), et dans lequel les parois avant et arrière présentent chacune au moins une ligne de fragilité (33) s'étendant parallèlement à la paroi de fond, et une ligne de fragilité (34) s'étendant perpendiculairement à la paroi de fond (7) et disposée au niveau de la ligne de fragilité (74) de la paroi de fond.

5. Casier selon la revendication 4, dans lequel les parois avant et arrière présentent chacune au moins deux alésages (32) en vis-à-vis disposés sous la ligne de fragilité (33) parallèle à la paroi de fond.

6. Casier selon le revendication 4 ou 5, comprenant en outre deux parois latérales (5, 6) se solidarisant aux paroi avant et arrière (3, 4) de façon amovible, chaque paroi latérale présentant une ligne de fragilité (53) sensiblement au niveau de la ligne de fragilité de la paroi avant.

7. Casier selon le revendication 6, dans lequel la paroi de fond (7) présente des encoches (73) et dans lequel les parois latérales présentent chacune un ergot (52) se logeant dans une encoche de la paroi de fond lorsque ces parois latérales (5, 6) sont solidarisées aux parois avant et arrière.

8. Casier selon l'une quelconque des revendications précédentes, dans lequel lesdites parois (3, 4, 5, 6,7) sont formées en matière synthétique.

9. Casier selon l'une quelconque des revendications précédentes, dans lequel une ligne de fragilité est formée par un amincissement suivant cette ligne de la section d'une paroi.

10. Casier selon l'une quelconque des revendications précédentes, dans lequel une rainure ménagée sur une face d'une desdites parois forme une ligne de fragilité.

## Claims

1. Rack (2) for plant wall, **characterized in that** it comprises:
- a base wall (7) ;
- front (3) and rear (4) walls, removably fastened to the base wall (7) to define between them a space for receiving a plant growing substrate, the front wall (3) has openings (31) to allow the passage of plant shoots, the front and rear walls each having at least a weakness line (33,34) along which it can be broken, the weakness line of the front wall being substantially at the same level as the weakness line of the rear wall.

2. Rack according to claim 1, wherein the weakness line (33,34) crosses at least one of the openings (31).

3. Rack according to claim 1 or 2, wherein the front and rear walls (3, 4) are removably fastened to the base wall (7) through sliding links of the tenon/mortise type (71,35).

4. Rack according to any one of the preceding claims, wherein the base wall (7) has a weakness line (74), and wherein the front and rear walls each have at least a weakness line (33) extending parallel to the base wall, and a weakness line (34) extending perpendicularly to the base wall (7) and located at the level of the weakness line (74) of the base wall.

5. Rack according to claim 4, wherein the front and rear walls each have two bores (32) located face to face, said bores being located under said weakness line parallel to the base wall (33).

6. Rack according to claim 4 or 5, further comprising two side walls (5, 6) removably fastened to the front and rear walls (3, 4), each side wall having a weakness line (53) substantially at the level of the weakness line of the front wall.

7. Rack according to claim 6, wherein the base wall (7) has notches (73) and wherein the sidewalls each have a lug (52) housed in a notch of the base wall when these side walls (5, 6) are fastened to the front and rear walls.

8. Rack according to any one of the preceding claims, wherein said walls (3, 4, 5, 6,7) are formed in plastic.

9. Rack according to any one of the preceding claims, wherein a weakness line is formed by a thininning of the section of the wall along this line.

10. Rack according to any one of the preceding claims, wherein a face of one of said walls has a groove, this groove forming a weakness line.

## Patentansprüche

1. Gitter (2) für eine Pflanzwand, **dadurch gekennzeichnet, dass** es umfasst:
- eine untere Wand (7);
- vordere (3) und hintere (4) Wände, die abnehmbar an der unteren Wand (7) fest befestigt sind, um untereinander einen Raum zu definieren, der zur Aufnahme eines Pflanzsubstrats bestimmt ist, wobei die vordere Wand (3) Öffnungen (31) aufweist, um den Durchgang von zu erlauben, wobei die vordere und die hintere Wand jeweils wenigstens eine Sollbruchlinie (33, 34) aufweisen, nach der sie gebrochen werden können, wobei die Sollbruchlinie der vorderen Wand sich deutlich auf der Höhe der Sollbruchlinie der hinteren Wand befindet.

2. Gitter gemäß Anspruch 1, in dem die Sollbruchlinie der vorderen Wand (33, 34) durch wenigstens eine der Öffnungen hindurchtritt (31).

3. Gitter gemäß Anspruch 1 oder 2, in dem die vordere und die hintere Wand (3, 4) durch gleitende Verbindungen vom Typ Zapfen / Zapfenloch (71, 35) fest an der unteren Wand (7) befestigt sind.

4. Gitter gemäß einem der vorherigen Ansprüche, in dem die untere Wand (79) eine Sollbruchlinie (74) aufweist und in der die vordere und die hintere Wand jeweils wenigstens eine Sollbruchlinie (33) aufweisen, die sich parallel zur unteren Wand erstreckt, und eine Sollbruchlinie (34), die sich lotrecht zur unteren Wand (7) erstreckt und auf der Höhe der Sollbruchlinie (74) der unteren Wand angeordnet ist.

5. Gitter gemäß Anspruch 4, in dem die vordere und die hintere Wand jeweils wenigstens zwei Bohrungen (32) gegenüber aufweisen, die unter der Sollbruchlinie (33) parallel zur unteren Wand angeordnet sind.

6. Gitter gemäß Anspruch 4 oder 5, das darüber hinaus zwei laterale Wände (5, 6) umfasst, die an der vorderen und der hinteren Wand (3, 4) abnehmbar fest befestigt sind, wobei jede laterale Wand eine Sollbruchlinie (53) deutlich auf der Höhe der Sollbruchlinie der vorderen Wand aufweist.

7. Gitter gemäß Anspruch 6, in dem die untere Wand (7) Einkerbungen (73) aufweist und in der die lateralen Wände jeweils einen Vorsprung (52) aufweisen, die sich in eine Einkerbung der unteren Wand einfügen, wenn diese lateralen Wände (5, 6) an den vorderen und hinteren Wänden fest befestigt sind.

8. Gitter gemäß einem der vorherigen Ansprüche, in dem die genannten Wände (3, 4, 5, 6, 7) aus synthetischem Material geformt sind.

9. Gitter gemäß einem der vorherigen Ansprüche, in dem eine Sollbruchlinie durch eine Verjüngung gemäß dieser Linie des Abschnitts einer Wand geformt wird.

10. Gitter gemäß einem der vorherigen Ansprüche, in dem eine auf einer Seite einer der genannten Wände ausgesparte Nut eine Sollbruchlinie formt.
